Europäisches Patentamt

European Patent Office

Office européen des brevets

(19)

(11) Numéro de publication : **0 016 713**
**B1**

# (12) FASCICULE DE BREVET EUROPÉEN

(45) Date de publication du fascicule du brevet :
05.10.83

(21) Numéro de dépôt : 80400407.5

(22) Date de dépôt : 26.03.80

(51) Int. Cl.³ : **F 28 D 19/02**

(54) Procédé de récupération de chaleur sur un courant gazeux chaud et dispositif de mise en oeuvre.

(30) Priorité : 27.03.79 FR 7907605

(43) Date de publication de la demande :
01.10.80 Bulletin 80/20

(45) Mention de la délivrance du brevet :
05.10.83 Bulletin 83/40

(84) Etats contractants désignés :
**AT BE CH DE GB IT LU NL SE**

(56) Documents cités :
**EP A 0 009 455**
**EP A 0 009 456**
**FR A 1 469 109**
**FR A 2 179 145**
**GB A 11 774**
**GB A 21 739**
**GB A 668 995**
**GB A 821 003**
**GB A 1 113 176**
**GB A 1 375 238**
**US A 2 770 543**
**US A 2 967 693**
**US A 3 905 336**

(73) Titulaire : **TUNZINI-NESSI ENTREPRISES D'EQUIPE-MENTS**
**90, rue Cardinet**
**F-75849 Paris Cedex 17 (FR)**

(72) Inventeur : **Meunier, Georges**
**15, rue Vauthier**
**F-92100 Boulogne (FR)**
Inventeur : **Martin, Jean-François**
**L'Orangerie Route de la Jonchère**
**F-78170 La Celle Saint-Cloud (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

## Procédé de récupération de chaleur sur un courant gazeux chaud et dispositif de mise en œuvre

La présente invention concerne la récupération de chaleur sur un courant gazeux, notamment sur des fumées.

Pour récupérer la chaleur sur des fumées, il est connu d'utiliser des tubes disposés sur le trajet des fumées et dans lesquels circule un fluide caloporteur. De la même façon, pour refroidir ou réchauffer des solides divisés, on a déjà proposé de les entraîner par un courant gazeux et de les faire passer sur des tubes dans lesquels circule un fluide caloporteur.

Toutefois, l'utilisation de tels tubes ne permet pas d'obtenir une efficacité d'échange très élevée.

Un meilleur échange est possible avec le dispositif décrit dans la publication européenne de brevet n° 0 009 456 (Article 54,3 CBE). Dans ce dispositif des particules solides qu'on désire porter à haute température pour les traiter, sont distribuées au sommet d'une première colonne comportant plusieurs niveaux de garnissage et elles s'échauffent jusqu'à la température désirée en s'écoulant par gravité à travers ces garnissages, à contre-sens d'un courant gazeux chaud introduit à la base de la colonne. Recueillies après traitement au bas de cette colonne, elles peuvent être déversées au sommet d'une seconde colonne du même type que la première, pour tomber à contre-courant d'un courant froid introduit à la base de cette seconde colonne, transférant ainsi progressivement leur chaleur audit courant d'air. Ce courant d'air recueilli au sommet de cette seconde colonne, éventuellement encore réchauffé à l'aide d'un brûleur d'appoint peut servir à alimenter la première colonne.

Mais ce dispositif qui réalise de bons échanges thermiques est spécialement destiné au traitement des particules solides par la chaleur à l'intérieur d'une des colonnes ; il fonctionne en cycle fermé et ne permet donc pas de récupérer de l'énergie à l'intérieur des colonnes puis de la transférer à l'extérieur en vue d'une utilisation.

La présente invention vise à récupérer de la chaleur sur des fumées avec des échanges thermiques bien plus élevés que ceux autorisés par les tubes disposés sur le trajet des fumées, identiques à ceux réalisés dans le dispositif à double colonne de la publication de brevet EP-0 009 456, puis à la transférer à l'extérieur du dispositif récupérateur en vue d'une utilisation.

A cet effet, la présente invention a pour objet un procédé de récupération de chaleur sur un courant gazeux chaud, dans lequel on fait passer le courant gazeux chaud à contre courant de particules solides plus froides s'écoulant par gravité dans une première colonne, comprenant au moins un étage constitué d'un empilement d'éléments de garnissage disposé sur une grille-support, puis dans lequel on distribue lesdites particules ainsi réchauffées au sommet d'une seconde colonne pour les laisser tomber à contre courant d'un second courant gazeux plus froid, au moins un courant supplémentaire sous la forme d'un fluide caloporteur en circulation dans des tubes entrant dans la seconde colonne et transférant à l'extérieur de la colonne la chaleur qu'il a récupérée.

Avantageusement on fait intervenir le ou les courants supplémentaires à une pluralité de niveaux.

Pour favoriser le transfert de chaleur dans un courant supplémentaire, on assure une rétention des particules au niveau où il intervient.

Dans un mode de réalisation, cette rétention est crée grâce à un lit fluidisé autour des tubes dans lesquels circule un courant supplémentaire.

Dans un autre mode de réalisation, on crée une quasi-fluidisation au niveau des tubes véhiculant un courant supplémentaire.

L'invention propose également une installation pour la récupération de chaleur sur un courant gazeux chaud comportant une première colonne ayant au moins un étage constitué d'un empilage d'éléments de garnissage disposés sur une grille support, un conduit d'amenée d'un courant gazeux sous le ou les étages et des moyens de répartition de particules solides au-dessus de cet étage, dans laquelle on fait passer le courant chaud à contre courant des particules solides plus froides s'écoulant par gravité et une seconde colonne au sommet de laquelle on distribue lesdites particules ainsi réchauffées pour les laisser tomber à contre courant d'un second courant gazeux plus froid, jusqu'à la base de ladite seconde colonne, la seconde colonne étant traversée par des tubes véhiculant du fluide caloporteur.

Dans un premier mode de réalisation, ces tubes sont sous forme de nappes horizontales disposées au-dessus d'une grille de fluidisation, le courant gazeux injecté à la base de cette seconde colonne assurant la fluidisation des particules solides délivrées au sommet de ladite seconde colonne, chaque nappe étant alors noyée dans un lit fluidisé et chaque lit fluidisé étant muni d'un siphon assurant le passage des particules solides en cascade d'un lit fluidisé au lit du dessous.

Dans un second mode de réalisation, ces tubes sont encore sous forme de nappes horizontales, mais ils sont munis d'ailettes ou disposés dans les ondes de tôles perforées, et éventuellement associés en faisceaux, l'ensemble de ces tubes ainsi équipés étant équivalent à un garnissage ayant un taux de vide de l'ordre de 75 %.

Dans les deux modes de réalisation, les tubes appartiennent à une chaudière.

Les particules solides pourront être constituées de différents matériaux et notamment, de sable, de calcaire, de dolomie, de chaux ou de mélanges de tels matériaux. Le sable est un matériau avantageux en raison de son faible coût, de sa capacité d'emmagasiner une quantité de chaleur appréciable et du fait qu'il peut être utilisé dans une large gamme de températures.

On pourra également utiliser des matériaux réfractaires du type microbilles de vitrocéramique ou de réfractaires électro-fondus, qui présentent une bonne tenue en température et une meilleure résistance à l'attrition.

Pour la récupération de chaleur de fumées contenant des produits tels que du $SO_3$, on utilise avantageusement du calcaire, de la chaux de la dolomie, ou des mélanges de ces produits avec du sable.

La deuxième colonne peut être disposée sous la première colonne. Toutefois, il est avantageux de séparer les deux colonnes pour des questions d'encombrement et d'adaptation aux cheminées existantes. La séparation des deux colonnes permet en outre de disposer entre ces colonnes un réservoir intermédiaire de stockage suffisamment important pour effectuer les régulations souhaitées.

La deuxième colonne peut être située à une grande distance de la première colonne. Il est ainsi possible de transporter par wagons calorifugés les particules chaudes dans une deuxième colonne située à grande distance. Ce transport sur une grande distance peut s'avérer intéressant lorsqu'on dispose de plusieurs premières colonnes légères peu onéreuses alimentant une seconde colonne plus importante. Il est à noter d'ailleurs qu'il est beaucoup plus facile de transporter des particules solides chaudes, par exemple à une température de 600 °C, que des fumées à la même température et surtout que des fumées polluées à la même température. Les particules solides représentent un volume incomparablement inférieur.

D'autres buts et avantages de la présente invention apparaîtront à la lecture de la description qui va suivre, faite en regard des dessins annexés.

Sur ces dessins :

la figure 1 représente une installation destinée à la mise en œuvre du procédé selon l'invention ;

la figure 2 représente un tube à ailettes utilisé dans l'installation de la figure 1 ;

la figure 3 représente des nappes de tubes à ailettes utilisées dans l'installation de la figure 1 ;

la figure 4 représente des tubes qui peuvent être utilisés en variante dans l'installation de la figure 1 ;

la figure 5 représente une variante d'une partie de l'installation représentée à la figure 1 ;

la figure 6 représente une variante d'une installation destinée à la récupération directe de chaleur dans le procédé selon l'invention.

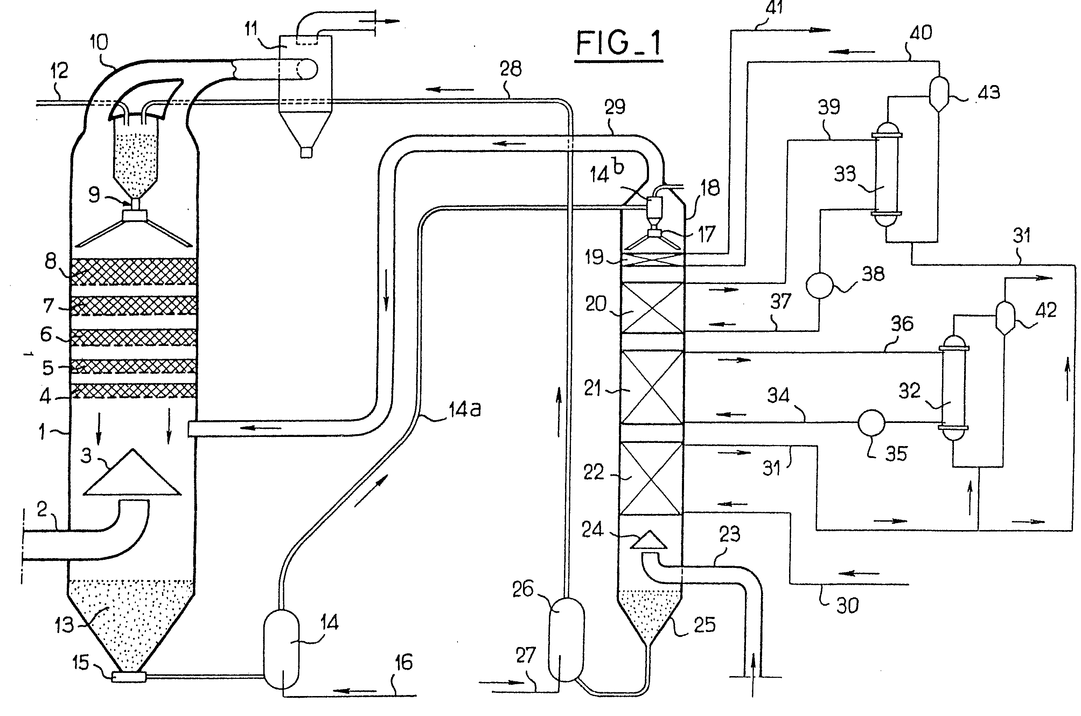

L'installation représentée sur la figure 1 comprend une colonne cylindrique à garnissage 1 à la partie inférieure de laquelle est branché un conduit 2 qui amène les fumées au centre de la colonne 1 sous un déflecteur 3.

La colonne, d'un diamètre de 2,800 mm comporte au-dessus du conduit 2 cinq étages successifs, respectivement 4, 5, 6, 7 et 8, constitués chacun d'un caillebotis à grandes mailles (60 × 20 mm) formé de lames d'acier réfractaire sur champ de 15 × 1 mm soudées par point, ayant une ouverture ou taux de vide de 93 % et supportant un empilement d'anneaux Pall en acier réfractaire de 25 × 25 mm, ayant une porosité de 94 %.

La hauteur du garnissage de chaque étage dans le sens de l'écoulement des gaz est respectivement de 150 mm, 150 mm, 200 mm, 200 mm et 300 mm. L'espace entre la partie supérieure d'un empilement et l'étage suivant est de 150 mm.

Un distributeur rotatif 9 de particules solides distribue des particules séparées les unes des autres, sur toute la surface de l'étage 8, qui est le plus élevé.

La colonne 1 comporte, au-dessus du distributeur 9, une cheminée 10 d'évacuation des fumées qui débouche sur un cyclone 11. Ce cyclone 11 sépare les particules fines et les poussières qui s'échappent de la colonne à garnissage 1.

Un conduit 12 permet d'amener au distributeur 9 des particules solides de remplacement ou de complément (calcaire par exemple).

Les particules solides s'écoulant par gravité dans la colonne 1 sont rassemblées au bas de la colonne dans une trémie 13.

Un transporteur pneumatique 14 comportant un extracteur 15 et un surpresseur à air 16 amène par un conduit 14[a] les particules solides chaudes stockées dans la trémie 13 jusqu'à un cyclone 14[b] disposé au-dessus d'un distributeur rotatif 17 disposé lui-même au sommet d'une colonne 18 de section rectangulaire de 0,55 × 0,60 m.

Cette colonne 18 comporte quatre faisceaux de nappes d'échange, respectivement, de haut en bas, 19, 20, 21 et 22. Un conduit 23 débouchant à la partie inférieure de la colonne 18 sous un déflecteur 24 introduit dans la colonne 18 de l'air froid sous pression à faible débit (par l'intermédiaire d'un ventilateur).

Les particules solides qui s'écoulent par gravité dans la colonne 18 sont recueillies dans une trémie 25 et reprises par un transporteur pneumatique 26 muni d'un surpresseur à air 27 pour être envoyées par un conduit 28 vers le distributeur rotatif 9 de la colonne à garnissage 1 ou vers un stockage de particules froides intermédiaires.

L'air chaud sortant de la colonne 18 est envoyé par un conduit 29 dans la colonne 1 sous l'étage 4.

Les faisceaux de nappes d'échange sont constitués de la façon suivante :

Le faisceau 22 servant d'économiseur est constitué de 12 nappes horizontales de tubes à ailettes qui seront décrits plus loin. Un conduit d'alimentation 30 amène à chacun des tubes de la nappe inférieure de l'eau déminéralisée sous une pression de 35 bars et à une température de 105 °C. Cette eau, après avoir parcouru les tubes en série des nappes successives, sort de la nappe supérieure par un conduit 31.

Ce conduit 31 sert à alimenter en eau des chaudières 32 (chaudière à 11 bars), et 33 (chaudière à 30 bars).

Le faisceau 21 servant d'échangeur basse pression comprend 12 nappes horizontales de tubes à ailettes. Un conduit 34, muni d'une pompe 35, amène à chacun des tubes de la nappe inférieure un thermofluide constitué par un mélange eutectique $KNO_3$-$NaNO_2$-$NaNO_3$ dans un rapport pondéral 53/40/7. (F = 140 °C). Ce thermofluide sort de la nappe supérieure par un conduit 36 et est envoyé à la chaudière 32 dans laquelle il sert à vaporiser l'eau amenée par le conduit 31.

Le faisceau 20 servant d'échangeur haute pression est du même type que le faisceau 21 mais comprend seulement 8 nappes. Un conduit 37 muni d'une pompe 38 amène un thermofluide qui sort à la partie supérieure par un conduit 39. Ce conduit amène le thermofluide à la chaudière 33 dans laquelle il sert à vaporiser l'eau amenée par le conduit 31.

Le faisceau 19 servant de surchauffeur comprend seulement 2 nappes. Un conduit 40 amène la vapeur sortant de la chaudière 33 aux tubes de la nappe inférieure et un conduit 41, relié aux tubes de la nappe supérieure, fournit de la vapeur surchauffée.

Les chaudières 32 et 33 sont de type classique à thermosiphon et ont un taux de recirculation de 10. Elles comportent chacune un système de dévésiculage à l'aide de cyclones, respectivement 42 et 43.

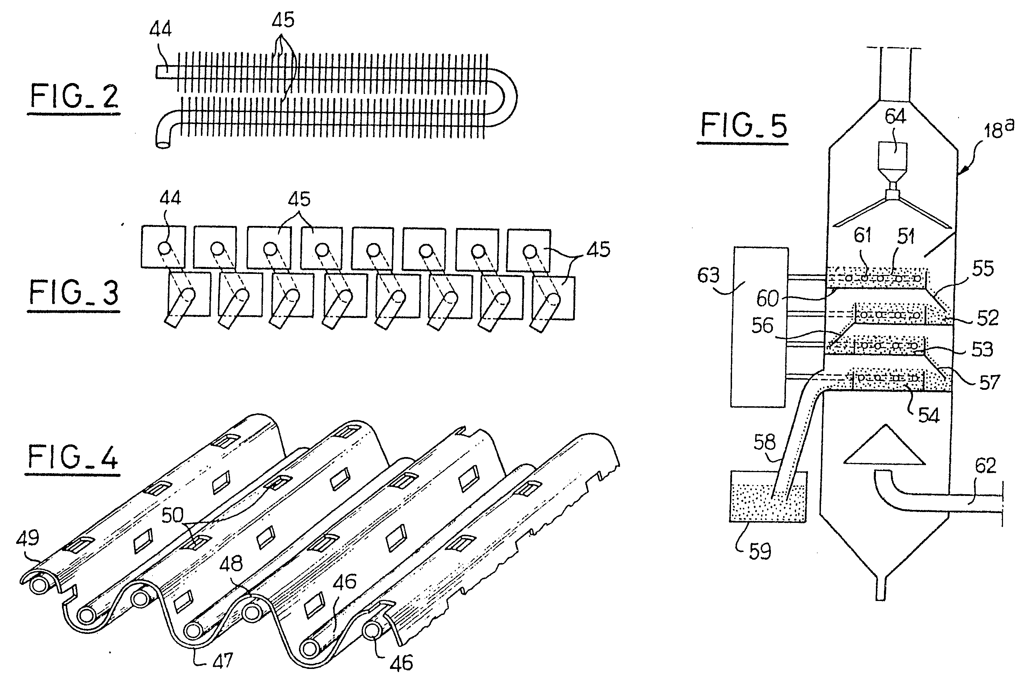

On a représenté sur la figure 2 les tubes à ailettes utilisés dans les faisceaux de nappes 19 à 22. Le tube 44 représenté correspond à deux nappes successives. C'est un tube de diamètre 21-26 mm en acier ordinaire, muni d'ailettes 45 carrées, en acier, de 60 × 60 mm et de 0,6 mm d'épaisseur.

Le nombre d'ailettes est de 166 par mètre, ce qui représente une surface d'échange de 1 m² par mètre de tube. La longueur munie d'ailettes dans une nappe est de 500 mm.

Le tube est recourbé en épingle et comporte sous la première série d'ailettes une deuxième série d'ailettes analogues.

Comme représenté à la figure 3, chaque nappe est constituée de 8 tubes à ailettes. La partie recourbée de chaque tube 44 est disposée en quinconce au pas de 66 mm par rapport à l'autre partie.

L'ensemble de ces tubes est équivalent à un garnissage ayant un taux de vide de 75 %.

On a représenté sur la figure 4 une variante de tubes utilisés dans les faisceaux de nappes 19 à 22. Chaque nappe comprend des tubes parallèles 46. Ces tubes sont disposés dans les ondes telles que 47 et 48 d'une tôle ondulée 49. Dans une nappe, chaque tube tel que 46 est ainsi séparé du suivant par la tôle. La tôle ondulée 49 présente des perforations 50 à sa partie supérieure. Ces perforations peuvent par exemple être des perforations de 10 × 50 mm quinconcées avec un pas de 15 mm.

A titre d'exemple, on fait fonctionner l'installation pour récupérer de la chaleur d'un four à verre émettant 10 000 Nm3/h de fumées, à une température de 650 °C. Ces fumées contiennent environ 40 kg/h de $SO_3$ ou de mélange $SO_2$ + $SO_3$.

La vitesse des fumées dans la colonne 1 sous l'étage 4 est de 1,5 m/s.

On utilise comme particules solides du calcaire ayant une granulométrie moyenne de 250 microns. On peut également utiliser un mélange de sable et de calcaire. Le calcaire réagit avec le $SO_2$ et le $SO_3$ pour former du sulfate de calcium et du gaz carbonique.

Le débit des particules solides est de 11 tonnes/h et leur température d'entrée dans la colonne 1 est de 150 °C.

Ces particules sortent de la colonne 1 à une température maximum de 600 °C, alors que les fumées sortent de la colonne 1 à une température de 200 °C.

Le débit d'air dans la colonne 18 est de 1 000 Nm³/h.

On obtient une quantité de vapeur surchauffée à 350 °C sous une pression de 30 bars dans la chaudière 33 de 1,5 tonne/h et une quantité de vapeur saturée sous une pression de 11 bars dans la chaudière 32 de 1,6 tonne/h.

On renouvelle le calcaire à raison d'environ 60 kg/h en l'envoyant par le conduit 12 dans le distributeur 9.

On obtient ainsi une récupération de chaleur particulièrement efficace, tout en épurant les fumées du four, notamment du $SO_3$ qu'il contient (on arrête jusqu'à 95 % du $SO_3$) et sans qu'il se produise de phénomène de corrosion.

Si l'on veut effectuer un stockage d'énergie pendant une journée ou plus, il est possible de prévoir à la sortie de la colonne 1 un réservoir calorifugé destiné au stockage des particules chaudes avant d'effectuer la récupération de chaleur dans la colonne 18.

On a représenté sur la figure 5 une variante 18ᵃ d'une colonne 18. La colonne 18ᵃ représentée sur la figure 5 comporte une série de 4 lits fluidisés de particules solides respectivement 51, 52, 53 et 54 disposés en cascade.

Le passage en cascade entre les différents lits est assuré par des siphons 55, 56 et 57 et l'évacuation du lit inférieur 54 est assurée par un siphon 58 débouchant dans un bac 59. Chacun de ces lits comporte une grille de fluidisation 60. Dans chacun des lits est disposé un tube horizontal tel que 61 en serpentin. De l'air de fluidisation est envoyé par un conduit 62 sous la grille du lit 54. Chacun des tubes tels que 61, est relié à un dispositif approprié 63 de production de vapeur, par exemple du type représenté en détail sur la figure 1.

Le fonctionnement de cette colonne 18ᵃ est très voisin de celui de la colonne 18 de la figure 1.

Les particules solides distribuées par le distributeur 64 tombent par gravité sur le lit fluidisé supérieur et, de là, en cascade sur les autres lits fluidisés. Le courant gazeux amené par le tube 62 assure la fluidisation des différents lits fluidisés. La chaleur récupérée peut être utilisée comme dans le cas de la colonne 18 pour la production de vapeur sous 11 et 30 bars.

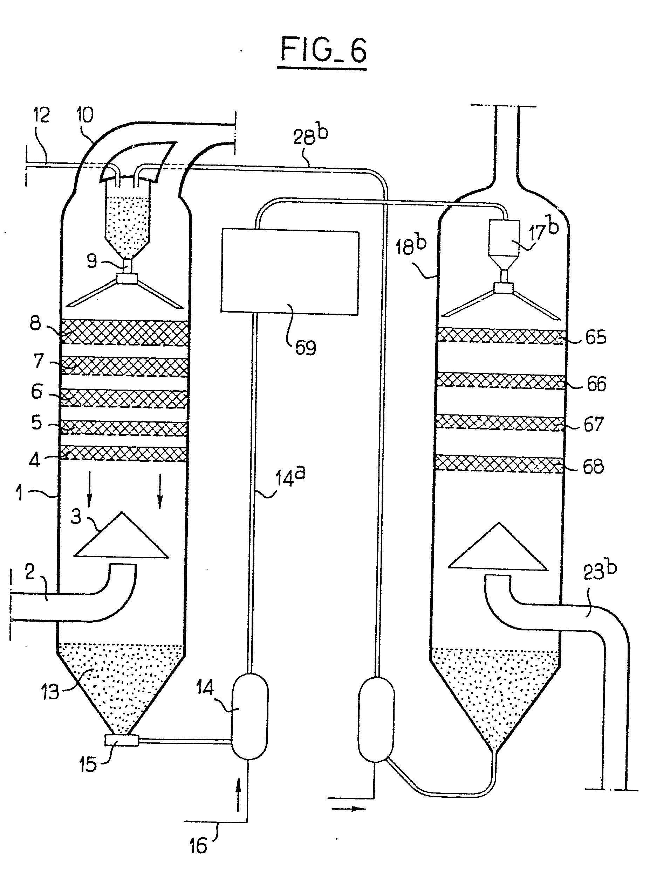

On a représenté sur la figure 6 une installation destinée à la récupération directe de chaleur, c'est-à-dire sans fluide caloporteur intermédiaire, avec seulement deux courants dans la seconde colonne, un courant descendant de particules solides et un courant ascendant de gaz.

L'installation représentée sur la figure 6 comprend une première colonne 1 identique à celle représentée sur la figure 1. Les particules réchauffées obtenues au bas de la colonne 1 sont amenées par un transporteur pneumatique 14 à un distributeur rotatif 17$^b$ au sommet d'une colonne 18$^b$. Cette colonne comporte quatre étages respectivement 65, 66, 67 et 68, analogues aux étages 4 à 8 de la colonne 1.

Un gaz froid, tel que de l'air est introduit par un conduit 23$^b$ à la partie inférieure de la colonne 18$^b$. Les particules solides s'écoulent par gravité dans la colonne 18$^b$ et sont ramenées par un conduit 28$^b$ à la partie supérieure de la colonne 1.

Le conduit 14$^a$ d'amenée de particules de la colonne 1 à la colonne 18$^b$ comporte un réservoir de stockage 69 permettant de disposer d'énergie de façon discontinue, au moment opportun.

Dans une telle installation fonctionnant avec un mélange de sable et de calcaire et des fumées à une température de 1 000 °C, il est possible d'obtenir à la sortie de la colonne 1 des particules solides à une température de 800 °C et des fumées épurées à une température de 200 °C. Dans la colonne 18$^b$ où l'on introduit de l'air froid, on obtient à la sortie des particules solides à 150 °C qui sont recyclées dans la colonne 1, et de l'air à une température de 700 °C. Cet air, qui est dépourvu d'impuretés telles que du SO$_3$, est utilisable dans une chaudière classique à tubes. On notera la faible baisse entre la température des fumées et celle de l'air chaud récupéré.

**Revendications**

1. Procédé de récupération de chaleur sur un courant gazeux chaud dans lequel on fait passer le courant gazeux à contre courant de particules solides plus froides, s'écoulant par gravité dans une première colonne (1) comprenant au moins un étage constitué d'un empilement d'éléments de garnissage disposé sur une grille support, puis dans lequel on distribue lesdites particules ainsi réchauffées au sommet d'une seconde colonne (18, 18a) pour les laisser tomber jusqu'à la base de ladite colonne, à contre courant d'un second courant gazeux plus froid, caractérisé en ce que dans la seconde colonne (18, 18a), on fait entrer au moins un courant supplémentaire sous la forme de fluide caloporteur circulant dans des tubes (44, 46, 61), et en ce qu'on utilise la chaleur transférée dans ce courant supplémentaire.

2. Procédé selon la revendication 1, caractérisé en ce qu'on fait entrer, intervenir et sortir le ou les courants supplémentaires à une pluralité de niveaux.

3. Procédé selon la revendication 2, caractérisé en ce que dans la seconde colonne, un courant supplémentaire circule essentiellement dans un plan perpendiculaire à la direction des particules solides et du courant gazeux.

4. Procédé selon l'une quelconque des revendications 2 ou 3, caractérisé en ce qu'on assure une rétention des particules à chacun des niveaux où intervient un courant supplémentaire.

5. Procédé selon la revendication 4, caractérisé en ce qu'on obtient la rétention à chaque niveau par création d'un lit fluidisé (51, 52, 53, 54) autour des tubes (61) dans lesquels circule un courant supplémentaire.

6. Procédé selon la revendication 4, caractérisé en ce qu'on crée une quasi fluidisation au niveau des tubes (44, 46) véhiculant un courant supplémentaire.

7. Procédé de récupération de chaleur sur un courant gazeux chaud, dans lequel on fait passer le courant gazeux chaud à contre courant de particules solides plus froides s'écoulant par gravité dans une première colonne (1) comprenant au moins un étage constitué d'un empilement d'éléments de garnissage disposé sur une grille support, puis dans lequel on distribue lesdites particules ainsi réchauffées au sommet d'une seconde colonne (18b) pour les laisser tomber à contre courant d'un second courant gazeux plus froid, caractérisé en ce qu'on utilise à l'extérieur desdites deux colonnes l'énergie du courant chaud dégagé au sommet de la seconde colonne (18b).

8. Procédé selon l'une quelconque des revendications précédentes, caractérisé en ce qu'on recycle en haut de la première colonne (1) les particules solides recueillies en bas de la seconde colonne (18, 18a, 18b).

9. Procédé selon l'une quelconque des revendications précédentes, caractérisé en ce que les particules solides comportent des substances chimiques aptes à réagir avec le courant gazeux chaud envoyé à la base de la 1ère colonne (1), notamment du calcaire, de la chaud et/ou de la dolomie lorsque ledit courant est constitué par des fumées chargées en sulfates, en particulier des fumées issues d'un four de verrerie.

10. Installation pour la récupération de chaleur sur un courant gazeux chaud comportant une première colonne (1) ayant au moins un étage constitué d'un empilage d'éléments de garnissage disposés sur une grille support, un conduit d'amenée d'un courant gazeux sous le ou les étages et des moyens de répartition de particules solides au-dessus de cet étage, dans laquelle on fait passer le courant chaud à contre courant des particules solides plus froides s'écoulant par gravité et une seconde colonne (18) au sommet de laquelle on distribue lesdites particules ainsi réchauffées pour les laisser tomber à contre courant d'un second courant gazeux plus froid, jusqu'à la base de ladite seconde colonne, caractérisée en ce que la seconde colonne (18) est traversée par des tubes (44, 46 ou 61) véhiculant du fluide caloporteur.

11. Installation selon la revendication 10, caractérisée en ce que ces tubes (44, 46) sont disposés, dans la deuxième colonne (18), sous forme de nappes horizontales.

12. Installation selon la revendication 11, caractérisée en ce que chaque nappe est disposée au-dessus d'une grille de fluidisation (60), le courant gazeux injecté à la base de cette seconde colonne (18a) assurant la fluidisation des particules solides délivrées au sommet de ladite seconde colonne (18a), et ladite nappe étant alors noyée dans le lit fluidisé, chaque lit fluidisé (51, 52, 53) étant muni d'un siphon (55, 56, 57) assurant le passage des particules solides en cascade d'un lit fluidisé au lit du dessous.

13. Installation selon la revendication 11, caractérisée en ce que les tubes sont équipés d'ailettes (45) ou disposés dans les ondes (47, 48) de tôles perforées (49), et éventuellement dans laquelle plusieurs nappes contiguës de tubes (46) sont associées en faisceaux (19, 20, 21, 22), l'ensemble de ces tubes (44 ou 46) ainsi équipés et disposés équivalent à un garnissage ayant un taux de vide de l'ordre de 75 %.

14. Installation selon l'une quelconque des revendications 10 à 13, caractérisée en ce que ces tubes (44, 46 ou 61) appartiennent à une chaudière (32, 33, 63).

15. Installation pour la récupération de chaleur sur un courant gazeux chaud comportant une première colonne (1) dans laquelle on fait passer le courant chaud à contre courant de particules solides plus froides s'écoulant par gravité et une seconde colonne (18b) au sommet de laquelle on distribue lesdites particules ainsi réchauffées pour les laisser tomber à contre courant d'un second courant gazeux plus froid, ladite seconde colonne (18b) possédant à son sommet une sortie à l'extérieur de l'installation pour le courant gazeux ainsi réchauffé au contact des particules, caractérisée en ce que les deux colonnes (1 et 18b) sont des colonnes munies chacune d'au moins un niveau d'empilement de garnissage (4, 5, 6, 7, 8 et 68, 67, 66, 65).

16. Installation selon l'une quelconque des revendications 10 à 15 caractérisée en ce qu'elle comporte un circuit (28, 28b) de recyclage des particules solides partant du bas de la seconde colonne (18, 18a, 18b) et aboutissant au système (9) distributeur de particules solides en haut de la première colonne (1).

### Claims

1. Method of recovering heat from a stream of hot gas in which the gas stream is passed counter-current to colder solid particles, flowing by gravity in a first column (1) comprising at least one stage formed of a stack of packing elements arranged on a support grid and in which said particles thus heated are distributed at the top of a second column (18, 18a) and allowed to fall to the bottom of that column, counter-current to a second stream of gas which is colder, characterised in that into the second column (18, 18a) there is caused to enter at least one additional stream in the form of heat transfer fluid passing through tubes (44, 46, 61), and in that the heat transferred to this additional stream is used.

2. Method according to claim 1, characterised in that additional stream or streams is caused to enter, operate and leave at a plurality of levels.

3. Method according to claim 2, characterised in that in the second column an additional stream passes essentially in a plane perpendicular to the direction of the solid particles and the gas stream.

4. Method according to either of claims 2 and 3, characterised in that particles are retained at each of the levels where an additional stream operates.

5. Method according to claim 4, characterised in that the particles are retained at each level by creation of a fluidised bed (51, 52, 53, 54) around the tubes (61) in which an additional stream passes.

6. Method according to claim 4, characterised in that there is created a quasi-fluidisation at the level of the tubes (44, 46) carrying an additional stream.

7. Method of recovering heat from a stream of hot gas, in which the hot gas stream is passed counter-current to colder solid particles flowing by gravity in a first column (1) comprising at least one stage formed of a stack of packing elements arranged on a support grid, and in which said particles thus heated are distributed at the top of a second column (18b) and allowed to fall counter-current to a second stream of gas which is colder, characterised in that the energy from the hot stream released at the top of the second column (18b) is used outside the two columns.

8. Method according to any one of the preceding claims, characterised in that the solid particles collected at the bottom of the second column (18, 18a, 18b) are recycled to the top of the first column (1).

9. Method according to any one of the preceding claims, characterised in that the solid particles comprise chemical substances capable of reacting with the hot gas stream brought to the bottom of the first column (1), notably limestone, calcium oxide and/or dolomite when said stream is formed of gases containing sulphate, in particular gases discharged from a glass furnace.

10. Apparatus for recovering heat from a stream of hot gas comprising a first column (1) having at least one stage formed of a stack of packing elements arranged on a support grid, a duct for feeding a gas stream below the stage or stages and means for distributing the solid particles above this stage, in which the hot stream is passed counter-current to colder solid particles flowing under gravity and a second column (18) at the top of which said particles thus reheated are distributed and allowed to fall counter-current to a second colder gaseous stream to the bottom of said second column, characterised in that the second column (18) is traversed by tubes (44, 46 or 61) carrying heat transfer fluid.

11. Apparatus according to claim 10, characterised in that these tubes (44, 46) are arranged in the second column (18) in the form of horizontal layers.

12. Apparatus according to claim 11, characterised in that each layer is arranged above a fluidisation grid (60), the gas stream injected at the bottom of this second column (18a) effecting fluidisation of the solid particles delivered at the top of said second column (18a), and said layer being immersed in the fluidised bed, each fluidised bed (51, 52, 53) being provided with a syphon (55, 56, 57) effecting passage of the solid particles as a cascade from one fluidised bed to the bed below.

13. Apparatus according to claim 11, characterised in that the tubes are provided with fins (45) or arranged in corrugations (47, 48) of perforated sheets (49), and optionally in which a plurality of contiguous layers of tubes (46) are associated as a bundle (19, 20, 21, 22), the assembly of these tubes (44 or 46) thus equipped and arranged being equivalent to a packing having a porosity of the order of 75 %.

14. Apparatus according to any one of claims 10 to 13, characterised in that these tubes (44, 46 or 61) belong to a boiler (32, 33, 63).

15. Apparatus for recovering heat from a stream of hot gas comprising a first column (1) in which the hot stream is passed counter-current to colder solid particles flowing under gravity and a second column (18b) at the top of which said particles thus reheated are distributed and allowed to fall counter-current to a second stream of colder gas, said second column (18b) having at its top an outlet to the exterior of the apparatus for the gas stream thus heated by contact with the particles, characterised in that the two columns (1 and 18b) are both provided at at least one level with a stack of packing elements (4, 5, 6, 7, 8 and 68, 67, 66, 65).

16. Apparatus according to any one of claims 10 to 15 characterised in that it comprises a circuit (28, 28b) for recycling solid particles from the bottom of the second column (18, 18a, 18b) and leading to a system (9) for distributing solid particles to the top of the first column (1).

**Ansprüche**

1. Verfahren zur Rückgewinnung von Wärme in einem heißen Gasstrom, bei welchem der Gasstrom im Gegenstrom zu festen, kälteren Teilchen geführt wird, welche durch Schwerkraft in einer ersten Kolonne (1) fließen, welche wenigstens einen Boden aufweist, der aus einem Haufen von Füllkörperelementen besteht, die auf einem Auflagerost angeordnet sind, worauf diese schon wiedererwärmten Teilchen am Kopf einer zweiten Kolonne (18, 18a) verteilt werden, um sie auf den Boden dieser Kolonne im Gegenstrom zu einem zweiten, kälteren Gasstrom absinken zu lassen, dadurch gekennzeichnet, daß in die zweite Kolonne (18, 18a) wenigstens ein zusätzlicher Strom in Form eines in Rohren (44, 46, 61) zirkulierenden Wärmeträgers eingeleitet und die in diesen Zusatzstrom übertragene Wärme nutzbar gemacht wird.

2. Verfahren nach Anspruch 1, dadurch gekennzeichnet, daß man den oder die Zusatzströme auf einer Vielzahl von Ebenen eintreten, wirksam werden und austreten läßt.

3. Verfahren nach Anspruch 2, dadurch gekennzeichnet, daß in der zweiten Kolonne ein Zusatzstrom im wesentlichen in einer Ebene senkrecht zur Richtung der festen Teilchen und des Gasstromes umgewälzt wird.

4. Verfahren nach einem der Ansprüche 2 oder 3, dadurch gekennzeichnet, daß auf jeder Ebene, in der ein Zusatzstrom wirksam gemacht wird, ein Zurückhalten der Teilchen sichergestellt wird.

5. Verfahren nach Anspruch 4, dadurch gekennzeichnet, daß das Zurückhalten in jeder Ebene durch Erzeugen eines Schwebebettes (51, 52, 53) um die Rohre (61), in denen ein Zusatzstrom zirkuliert, bewerkstelligt wird.

6. Verfahren nach Anspruch 4, dadurch gekennzeichnet, daß auf der Ebene der einen Zusatzstrom führenden Rohre (44, 46) eine Quasiverwirbelung erzeugt wird.

7. Verfahren zur Rückgewinnung von Wärme in einem heißen Gasstrom, bei dem der heiße Gasstrom im Gegenstrom zu festen, kälteren Teilchen geführt wird, die durch Schwerkraft in einer ersten Kolonne (1) fließen, welche wenigstens einen Boden aufweist, der aus einer Schicht aus auf einem Auflagerost angeordneten Füllkörperelementen besteht, worauf diese schon wiedererwärmten Teilchen am Kopf einer zweiten Kolonne (18b) verteilt werden, um sie im Gegenstrom zu einem zweiten kälteren Gasstrom fallen zu lassen, dadurch gekennzeichnet, daß man außerhalb der beiden Kolonnen die Energie des heißen Stromes verwendet, der am Kopf der zweiten Kolonne (18b) freigesetzt wird.

8. Verfahren nach einem der vorangegangenen Ansprüche, dadurch gekennzeichnet, daß in Höhe der ersten Kolonne (1) die am Boden der zweiten Kolonne (18, 18a, 18b) wiedergewonnenen Teilchen umgewälzt werden.

9. Verfahren nach einem der vorangegangenen Ansprüche, dadurch gekennzeichnet, daß die festen Teilchen chemische Substanzen enthalten, die mit dem zum Boden der ersten Kolonne (1) geführten heißen Gasstrom reaktionsfähig sind, insbesondere Kalziumkarbonat, Kalziumoxid und/oder Dolomit, während der Gasstrom aus mit Sulfat beladenen Räuchen besteht, insbesondere Räuchen aus einem Glasofen.

10. Vorrichtung zur Rückgewinnung von Wärme in einem heißen Gasstrom mit einer ersten Kolonne (1), die wenigstens einen Boden aus auf einem Auflagerost verteilten Füllkörperelementen, eine Zuleitung zur Zuführung eines Gasstromes unter den Boden oder die Böden und Einrichtungen zum Verteilen der festen Teilchen über diesem Boden aufweist und in der der heiße Strom im Gegenstrom zu den durch Schwerkraft fließenden Teilchen geführt wird, und mit einer zweiten Kolonne (18), an deren Kopf die schon wieder aufgeheizten Teilchen verteilt werden, um sie im Gegenstrom zu einem kälteren Gasstrom zum Boden der zweiten Kolonne (18b) fallen zu lassen, dadurch gekennzeichnet, daß die zweite Kolonne (18), von Rohren (44, 46 oder 61) durchsetzt ist, die einen Wärmeträger führen.

11. Vorrichtung nach Anspruch 10, dadurch gekennzeichnet, daß die Rohre (44, 46) in der zweiten Kolonne (18) in Form von horizontalen Lagen angeordnet sind.

12. Vorrichtung nach Anspruch 11, dadurch gekennzeichnet, daß jede Lage über einem Wirbelstromrost (60) angeordnet ist, wobei der am Boden der zweiten Kolonne (18a) eingeleitete Gasstrom das Wirbelbett der festen, am Kopf der zweiten Kolonne (18a) verteilten Teilchen sichert und die Lage dann in das Wirbelbett eingetaucht ist und wobei jedes Wirbelbett (51, 52, 53) mit einem Siphon (55, 56, 57) ausgestattet ist, der den Durchlaß der festen Teilchen kaskadenförmig von einem Wirbelbett zum darunterliegenden sichert.

13. Vorrichtung nach Anspruch 11, dadurch gekennzeichnet, daß die Rohre mit Rippen (45) versehen sind oder in den Wellen (47, 48) von perforierten Blechen (49) angeordnet sind und gegebenenfalls mehrere Lagen aus Rohren (46) zu Bündeln (19, 20, 21, 22) zusammengefäßt sind, wobei die Gesamtheit der so ausgerüsteten und angeordneten Rohre (44 oder 46) einer Füllkörperfüllung mit einem Hohlraumanteil von 75 % entspricht.

14. Vorrichtung nach einem der Ansprüche 10 bis 13, dadurch gekennzeichnet, daß die Rohre (44, 46 oder 61) zu einem Heizkessel gehören.

15. Vorrichtung zur Rückgewinnung von Wärme in einem heißen Gasstrom mit einer ersten Kolonne (1), in der der heiße Strom im Gegenstrom zu festen kälteren Teilchen geführt ist, die durch Schwerkraft fließen, und mit einer zweiten Kolonne (18b), an deren Kopf die wiederaufgeheizten Teilchen so verteilt werden, daß sie im Gegenstrom zu einem zweiten, kälteren Gasstrom herunterfallen, wobei die zweite Kolonne (18b) an ihrem Kopf einen Auslaß nach außerhalb der Vorrichtung für den durch den Kontakt mit den Teilchen wiederaufgeheizten Gasstrom aufweist, dadurch gekennzeichnet, daß die beiden Kolonnen (1 und 18b) Kolonnen sind, die jeweils mit mindestens einem Boden aus einer Füllkörperschicht (4, 5, 6, 7, 8 und 68, 67, 66, 65) versehen sind.

16. Vorrichtung nach einem der Ansprüche 10 bis 15, dadurch gekennzeichnet, daß sie einen Rückführungskreis (28, 28b) für die festen Teilchen aufweist, der vom Fuß der zweiten Kolonne (18, 18a, 18b) ausgeht und in das Verteilungssystem (9) für die festen Teilchen am Kopf der ersten Kolonne (1) mündet.

FIG_1

**FIG. 2**

44
45

**FIG. 3**

44
45
45

**FIG. 4**

49
50
48
47
46
46
46

**FIG. 5**

18a
64
61
51
55
52
53
57
54
62
60
56
63
58
59

2

# 0 016 713

## FIG_6

3